# EUROPÄISCHE PATENTSCHRIFT

(11) **EP 3 670 403 B1**
(45) Veröffentlichungstag und Bekanntmachung des Hinweises auf die Patenterteilung: **27.01.2021**
(21) Anmeldenummer: 18215452.6
(22) Anmeldetag: 21.12.2018
(51) Int. Cl.: B65G 53/56, B65G 53/66, F16L 37/00

(54) **KUPPLUNGSBAHNHOF FÜR EIN PNEUMATISCHES FÖRDERSYSTEM FÜR SCHÜTTFÄHIGE MATERIALIEN**
COUPLING STATION FOR PNEUMATIC CONVEYOR FOR BULK MATERIALS
STATION DE COUPLAGE POUR UN SYSTÈME DE TRANSPORT PNEUMATIQUE POUR MATIÈRES VERSABLES

(43) Veröffentlichungstag der Anmeldung: 24.06.2020
(73) Patentinhaber: Wenz Kunststoff GmbH & Co. KG, 58511 Lüdenscheid (DE)
(72) Erfinder: Weller, Karsten, 58509 Lüdenscheid (DE)
(74) Vertreter: Patentanwälte Dörner & Kötter PartG mbB

(56) Entgegenhaltungen:
- DE-U1-202004 002 116
- DE-U1-202016 104 141

## Beschreibung

Die Erfindung betrifft einen Kupplungsbahnhof für ein pneumatisches Fördersystem für schüttfähige Materialien nach dem Oberbegriff des Patentanspruchs 1. Die Erfindung betrifft weiterhin ein Verfahren zur Ermittlung von Verbindungen von Zulaufrohren und Saugrohren eines Kupplungsbahnhofs nach dem Oberbegriff des Patentanspruchs 6 sowie ein pneumatisches Fördersystem nach dem Patentanspruch 10.

Ein solcher Kupplungsbahnhof und ein solches Verfahren zur Ermittlung von Verbindungen von Zulaufrohren und Saugrohren eines Kupplungsbahnhofs sind z.B. aus der DE 20 2016 104 141 U1 bekannt.

Zur Beschickung von Kunststoffverarbeitungsmaschinen mit Kunststoffgranulaten werden regelmäßig Saugförderanlagen eingesetzt, welche in Vorratsbehältern bevorratetes Kunstoffgranulat über Rohre den einzelnen Kunststoffverarbeitungsmaschinen zuführen. Um jede Kunststoffverarbeitungsmaschine mit jedem Vorratsbehälter verbinden zu können, werden sogenannte Kupplungsbahnhöfe eingesetzt, die über Zulaufrohre fest mit den Vorratsbehältern verbunden sind. Diese Zulaufrohre können über Kupplungen mit den Saugrohren verbunden werden, die an den Kunststoffverarbeitungsmaschinen angeschlossen sind. Als Saugrohre werden flexible Schläuche eingesetzt, die endseitig mit einem Gegenkupplungsstück versehen sind, über das sie mit den Kupplungsstücken der in dem Kupplungsbahnhof mündenden Zulaufrohre verbindbar sind. Auf diese Weise können variable Verbindungen zwischen den Vorratsbehältern und den Kunststoffverarbeitungsmaschinen innerhalb der Saugförderanlage hergestellt werden.

In der Praxis können dreißig und mehr Vorratsbehälter angeordnet sein, die je nach zu produzierender Charge mit einer Vielzahl von Kunststoffverarbeitungsmaschinen zu verbinden sind. Um hierbei sicherzustellen, dass der jeweilige Vorratsbehälter mit dem benötigten Material mit der richtigen Kunststoffverarbeitungsmaschine verbunden ist, ist es erforderlich, die einzelnen Rohranschlüsse eindeutig zu kennzeichnen. Hierbei ist es bekannt, die Rohrenden bzw. Kupplungen mit farbigen Markierungen zu versehen. Um eine fehlerhafte Zuordnung von Saugrohr und Zulaufrohr bei der Kupplung zu vermeiden, wird in der DE 20 2016 104 141 U1 vorgeschlagen, zur Kennzeichnung der miteinander zu kuppelnden Rohre bzw. Kupplungsstücke RFID-Tags einzusetzen und jedem Paar ankommender und abgehender Rohre jeweils ein RFID-Tag und einen hierauf angepassten RFID-Leser zuzuordnen. Hierdurch soll eine verbesserte und insbesondere auch elektronisch auswertbare, insbesondere zur Erzeugung von Alarmsignalen verwertbare Kennzeichnung der ankommenden und abgehenden Rohre ermöglicht werden. Nachteilig an der vorbekannten Lösung ist, dass diese bedingt durch die große Anzahl an erforderlichen RFID-Tags und RFID-Lesern sehr aufwendig ist. Zudem kann es aufgrund von äußeren Einwirkungen wie beispielsweise Staubbelastungen oder Magnetfeldern zu Lesefehlern kommen. Nicht zuletzt erfordert diese Lösung eine definierte Positionierung von RFID-Tag und RFID-Leser bei erfolgter Kupplung eines Kupplungsstücks mit einem Gegenkupplungsstück.

Hier will die Erfindung Abhilfe schaffen. Der Erfindung liegt die Aufgabe zu Grunde, einen Kupplungsbahnhof für ein pneumatisches Fördersystem für schüttfähige Materialien bereitzustellen, der aufwandminimiert herstellbar ist und unabhängig von äußeren Einwirkungen eine zuverlässige Überwachung der Verbindungen von Saugrohren und Zulaufrohren ermöglicht. Gemäß der Erfindung wird diese Aufgabe durch einen Kupplungsbahnhof mit den Merkmalen des Patentanspruchs 1 gelöst.

Mit der Erfindung ist ein Kupplungsbahnhof für ein pneumatisches Fördersystem für schüttfähige Materialien bereitgestellt, der aufwandminimiert herstellbar ist und der unabhängig von äußeren Einwirkungen eine zuverlässige Überwachung der Verbindungen von Saugrohren und Zulaufrohren ermöglicht. Dadurch, dass wenigstens zwei Zulaufrohre und wenigstens zwei Saugrohre jeweils mit einer elektrischen Leitung verbunden sind, die derart mit dem Kupplungs- bzw. Gegenkupplungsstück des zugeordneten Rohrs verbunden sind, dass durch die Verbindung eines Kupplungsstücks mit einem Gegenkupplungsstück eine elektrische Verbindung der mit den zugehörigen Rohren verbundenen elektrischen Leitungen bewirkt ist, wobei eine Steuereinrichtung angeordnet ist, die mit den Leitungen der Zulaufrohre und mit den Leitungen der Saugrohre verbunden ist und derart eingerichtet ist, dass die elektrischen Leitungen der Zulaufrohre beziehungsweise Saugrohre alternierend mit einem elektrischen Spannungsimpuls beaufschlagt werden, wobei die elektrischen Leitungen der Saugrohre bzw. Zulaufrohre auf das Anliegen des jeweils aufgegebenen Spannungsimpulses hin überprüft werden, ist eine einfache und zugleich zuverlässige Überprüfung der jeweils realisierten Kupplungsverbindungen erzielt. Ein Einsatz von Sensoren, die gegebenenfalls noch exakt zu positionieren sind, ist nicht erforderlich. Es wird lediglich mit jeder Kupplung eines Gegenkupplungsstücks eines Saugrohres mit dem Kupplungsstück eines Zulaufrohres ein Stromkreis geschlossen der durch die alternierende Beaufschlagung mit elektrischen Spannungsimpulsen durch die Steuereinrichtung eindeutig den miteinander verbunden Rohren zugeordnet werden kann.

Unter dem Begriff" Rohr" werden vorliegend starre sowie flexible Rohre, einschließlich Schläuche subsummiert.

In Weiterbildung der Erfindung ist die Leitung wenigstens eines Rohres durch dessen Metallbewehrung gebildet. Hierdurch ist eine separate Bestückung der Zulaufrohre sowie der Saugrohre mit elektrischen Leitungen nicht erforderlich. Es wird lediglich die in den verwendeten Rohren vorhandene Metallbewehrung zur Durchleitung der aufgegebenen elektrischen Spannungsimpulse verwendet.

In Ausgestaltung der Erfindung ist der Spannungsimpuls ein Kleinspannungsimpuls, der bevorzugt ein Wechselspannungsimpuls < 30 Volt oder ein Gleichspannungsimpuls von < 70 Volt ist. Hierdurch ist eine Gefährdung des Bedienpersonals durch die anliegenden Impulse ausgeschlossen. Bevorzugt ist die Steuereinrichtung eine speicherprogrammierbare Steuerung (SPS).

In Weiterbildung der Erfindung ist eine Anzeigevorrichtung vorhanden, die mit der Steuereinrichtung verbunden ist und auf der die von der Steuereinrichtung detektierten Verbindungen grafisch darstellbar sind. Hierdurch ist die bedienerseitige Überwachung der realisierten Verbindungen von Vorratsbehälter und Kunststoffverarbeitungsmaschinen ermöglicht. Die Steuereinrichtung weist hierzu bevorzugt eine Rechnereinheit mit einer Grafikeinheit auf, die mit der Anzeigevorrichtung verbunden ist.

Der Erfindung liegt weiterhin die Aufgabe zu Grunde, ein Verfahren zur Verifizierung von Verbindungen von Zulaufrohren und Saugrohren eines Kupplungsbahnhofes eines pneumatischen Fördersystems bereitzustellen, dass unempfindlich gegenüber äußeren Einwirkungen ist und zudem aufwandminimiert durchführbar ist. Gemäß der Erfindung wird diese Aufgabe durch ein Verfahren mit den Merkmalen des Patentanspruchs 6 gelöst. Dadurch, dass die Rohre mit einer elektrischen Leitung versehen werden, die elektrisch mit dem Kupplungs- oder Gegenkupplungsstückstück des jeweiligen Rohres verbunden werden, derart, dass bei Kupplung eines Kupplungsstücks mit einem Gegenkupplungsstücks die elektrischen Leitungen der dazugehörigen Rohre elektrisch verbunden sind, wobei die Leitungen der Zulaufrohre (oder alternativ der Saugrohre) alternierend mit einem elektrischen Spannungsimpuls beaufschlagt werden und wobei die Leitungen der Saugrohre (bzw. alternativ der Zulaufrohre) auf das Anliegen des jeweils aufgegebenen Spannungsimpulses überprüft werden, ist eine einfache und zugleich zuverlässige Detektierung der hergestellten Rohrverbindungen ermöglicht. Dabei wird als Spannungsimpuls bevorzugt ein Kleinspannungsimpuls verwendet, der vorteilhaft ein Wechselspannungsimpuls < 30 Volt oder ein Gleichspannungsimpuls von < 70 Volt ist. Besonders bevorzugt werden die Bewehrungen der Rohre als elektrische Leitungen zur alternierenden Aufgabe der Spannungsimpulse verwendet.

Gegenstand der vorliegenden Erfindung ist weiterhin ein pneumatisches Fördersystem mit einer Kupplungsvorrichtung der vorgenannten Art nach dem Patentanspruch 10

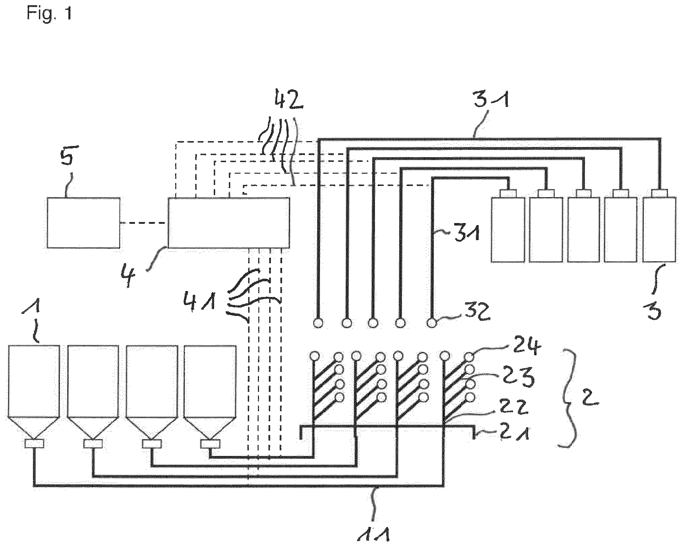

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Die einzige Figur 1 zeigt die schematische Darstellung eines pneumatischen Fördersystems zur Förderung von Kunststoffgranulat.

Das als Ausführungsbeispiel gewählte pneumatische Fördersystem zur Förderung von Kunststoffgranulaten umfasst eine Anzahl an Vorratsbehältern 1, die über Zulaufrohre 11 mit einem Kupplungsbahnhof 2 verbunden sind. Weiterhin ist eine Anzahl an Kunststoffverarbeitungsmaschinen 3 angeordnet, die jeweils mit einem Saugrohr 31 verbunden sind, das an seinem freien Ende ein Kupplungsgegenstück 32 aufweist und das der Beschickung der jeweiligen Kunststoffverarbeitungsmaschine 3 mit Kunststoffgranulat dient. In Figur 1 sind exemplarisch vier Vorratsbehälter 1 sowie fünf Kunststoffverarbeitungsmaschinen 3 gezeigt; in der Praxis sind regelmäßig mehr Vorratsbehälter sowie Kunststoffverarbeitungsmaschinen in einem Kunststoffverarbeitungsbetrieb vorhanden.

Der Kupplungsbahnhof 2 umfasst ein Gestell 21, in dem für jeden angeordneten Vorratsbehälter 1 ein Zulaufstrang 22 angeordnet ist, der über ein Zulaufrohr 11 fest mit einem Vorratsbehälter 1 verbunden ist. Jeder Zulaufstrang 22 weist Abzweige 23 auf, die endseitig mit einem Kupplungsstück 24 zur Kopplung mit einem Kupplungsgegenstück 22 eines Saugrohrs 21 versehen sind. In Figur 1 sind exemplarisch fünf mit einem Kupplungsstück 24 versehene Abzweige 23 - jeweils ein Abzweig pro angeordneter Kunststoffverarbeitungsmaschine 3 - vorgesehen.

Die Zulaufrohre 11 sowie die Saugrohre 31 sind mit einer Metallbewehrung versehen, die elektrisch mit dem Kupplungsstück 24 bzw. dem Kupplungsgegenstück 32 verbunden ist. Es ist eine speicherprogrammierbare Steuerung 4 angeordnet, die über Impulsleitungen 41 mit den als elektrische Leitung dienenden Metallbewehrungen der Zulaufrohre 11 verbunden ist. Über die Impulsleitungen 41 kann alternierend auf die als elektrische Leitung dienende Metallbewehrung eines jeden Zulaufrohres 11 ein elektrischer Spannungsimpuls aufgegeben werden. Weiterhin ist die speicherprogrammierbare Steuerung 4 über Detektionsleitungen 42 mit den als elektrische Leitungen dienenden Metallbewehrungen der Saugrohre 31 verbunden. Zur Anzeige der von der speicherprogrammierbaren Steuerung 4 ermittelten Rohrverbindungen ist diese mit einem Display 5 verbunden.

Zur Beschickung einer Kunststoffverarbeitungsmaschine 3 mit dem erforderlichen Kunstoffgranulat wird das mit dieser Kunststoffverarbeitungsmaschine 3 verbundene Saugrohr 31 mit dem Zulaufrohr 11 des entsprechenden Vorratsbehälters 1 verbunden, indem das Kupplungsgegenstück 32 des Saugrohrs 31 mit einem an das dem Zulaufrohr 11 zugeordneten Zulaufstrang 22 des Kupplungsbahnhofs 2 angeordneten Kupplungsstück 24 gekoppelt wird. Entsprechende Kopplungsvorgänge werden ebenfalls für alle übrigen Kunststoffverarbeitungsmaschinen 3 durchgeführt, deren Saugrohre 31 in derselben Art und Weise über den Kupplungsbahnhof 2 mit den die jeweils benötigten Materialien bevorratete den Vorratsbehältern 1 verbunden werden.

Über die speicherprogrammierbare Steuerung 4 werden alternierend auf die Metallbewehrung jedes einzelnen Zulaufrohres 11 zeitversetzt Gleichspannungsimpulse von 24 Volt aufgegeben. Zugleich wird durch die speicherprogrammierbare Steuerung 4 über die Detektionsleitungen 42 dasjenige Saugrohr 31 detektiert, an dessen Metallbewährung der jeweils aufgegebene Spannungsimpuls durchgeleitet wird. Auf diese Weise werden sämtliche Verbindungen von Zulaufrohren 11 und Saugrohren 31 ermittelt, die sodann auf dem Display 5 angezeigt werden.

In der speicherprogrammierbaren Steuerung 4 sind zum Abgleich die jeweils erforderlichen Verbindungen der Vorratsbehälter bzw. der mit diesem verbundenen Zulaufrohre 11 und den Kunststoffverarbeitungsmaschinen 3 bzw. der mit diesem verbundenen Saugrohre 31 hinterlegt. Wird eine Verbindung eines Saugrohrs 31 mit einem Zulaufrohr 11 ermittelt, die einer hinterlegten Zuordnung widerspricht, wird auf dem Display 5 eine optische Warnung ausgegeben. Zugleich kann die speicherprogrammierbare Steuerung 4 beispielsweise mit den Auslassventilen der Vorratsbehälter 1 verbunden sein, um in einem solchen Fall die Materialabgabe aus dem betreffenden, falsch zugeordneten Vorratsbehälter 1 zu unterbinden. Die Steuerung kann auch mit den Maschinensteuerungen der Kunstverarbeitungsmaschine verbunden sein, um in diesen Fall den Start des Fertigungsprozesses zu verhindern.

Durch den erfindungsgemäßen Kupplungsbahnhof sowie das erfindungsgemäße Verfahren zur Ermittlung bzw. Verifizierung von Verbindungen von Zulaufrohren und Saugrohren eines Kupplungsbahnhofs ist eine einfache sowie zugleich zuverlässige Ermittlung von tatsächlich realisierten Verbindungen ermöglicht, die sodann durch die angeordnete Steuereinrichtung verifiziert werden kann. Einer möglichen Fehlbeschickung einer Kunststoffverarbeitungsmaschine 3 ist hierdurch wirksam entgegengewirkt.

## Patentansprüche

1. Kupplungsbahnhof (2) für ein pneumatisches Fördersystem für schüttfähige Materialien, umfassend eine Anordnung von Zulaufrohren (11) mit endseitig angeordneten Kupplungsstücken (24) sowie eine Anordnung von Saugrohren (31) mit endseitig angeordneten Gegenkupplungsstücken (32), wobei die Kupplungsstücke (24) der Zulaufrohre (11) mit den Gegenkupplungsstücken (32) verschiedener Saugrohre (31) verbindbar sind, **dadurch gekennzeichnet, dass** wenigstens zwei Zulaufrohre (11) und wenigstens zwei Saugrohre (31) jeweils mit einer elektrischen Leitung verbunden sind, die derart mit dem Kupplungsstück (24) bzw. Gegenkupplungsstück (32) des zugeordneten Rohrs (1, 31) verbunden sind, dass durch die Verbindung eines Kupplungsstücks (24) mit einem Gegenkupplungsstück (32) eine elektrische Verbindung der mit den zugehörigen Rohren (11, 31) verbundenen elektrischen Leitungen bewirkt ist, wobei eine Steuereinrichtung angeordnet ist, die mit den elektrischen Leitungen der Zulaufrohre (11) und der Saugrohre (31) verbunden ist und derart eingerichtet ist, dass die Leitungen der Zulaufrohre (11) bzw. der Saugrohre (31) alternierend mit einem elektrischen Spannungsimpuls beaufschlagt werden, wobei die Leitungen der Saugrohre (31) bzw. der Zulaufrohre (11) auf die Durchleitung des jeweils aufgegebenen Spannungsimpulses hin überprüft werden.

2. Kupplungsbahnhof nach Anspruch 1, **dadurch gekennzeichnet, dass** die elektrische Leitung wenigstens eines Rohres (11, 31) durch dessen Metallbewehrung gebildet ist.

3. Kupplungsbahnhof nach einem der vorgenannten Ansprüche, **dadurch gekennzeichnet, dass** der Spannungsimpuls ein Kleinspannungsimpuls ist, der bevorzugt ein Wechselspannungsimpuls von kleiner gleich 30 V oder ein Gleichspannungsimpuls von kleiner gleich 70 V ist.

4. Kupplungsbahnhof nach einem der vorgenannten Ansprüche, **dadurch gekennzeichnet, dass** die Steuereinrichtung eine Speicherprogrammierbare Steuerung (4) ist, in der vorzugsweise Zuordnungen von Zulaufrohren (11) und Saugrohren (31) hinterlegt sind.

5. Kupplungsbahnhof nach einem der vorgenannten Ansprüche, **dadurch gekennzeichnet, dass** eine Anzeigevorrichtung (5) vorhanden ist, die mit der Steuereinrichtung verbunden ist und auf der die von der Steuereinrichtung ermittelten Verbindungen grafisch darstellbar sind.

6. Verfahren zur Ermittlung von Verbindungen von Zulaufrohren (11) und Saugrohren (31) eines Kupplungsbahnhofes (2) eines pneumatischen Fördersystems, **dadurch gekennzeichnet, dass** die Rohre (11, 31) mit einer elektrischen Leitung versehen werden, die mit dem Kupplungsstück (24) oder Gegenkupplungsstück (32) des jeweiligen Rohres (11, 31) verbunden werden, derart, dass bei Kopplung eines Kupplungsstücks (24) mit einem Gegenkupplungsstück (32) die elektrischen Leitungen der zugehörigen Rohre (11, 31) elektrisch verbunden sind, wobei die elektrischen Leitungen der Zulaufrohre (11) bzw. der Saugrohre (31) alternierend mit einem elektrischen Spannungsimpuls beaufschlagt werden und wobei die Leitungen der Saugrohre (31) bzw. der Zulaufrohre (11) auf die Durchleitung des jeweils aufgegebenen Spannungsimpulses hin überprüft werden.

7. Verfahren nach Anspruch 6, **dadurch gekennzeichnet, dass** der Spannungsimpuls ein Kleinspannungsimpuls ist, der bevorzugt ein Wechselspannungsimpuls von kleiner gleich 30 V oder ein Gleichspannungsimpuls von kleiner gleich 70 V ist.

8. Verfahren nach Anspruch 6 oder 7, **dadurch gekennzeichnet, dass** die Bewehrungen der Rohre (11, 31) als elektrische Leitungen zur alternierenden Aufgabe von Spannungsimpulsen verwendet werden.

9. Verfahren nach einem der Ansprüche 6 bis 8, **dadurch gekennzeichnet, dass** ermittelte Verbindungen von Zulaufrohen (11) und Saugrohren (31) mit Verbindungsvorgaben verglichen werden und bei einer Abweichung ein Alarmsignal ausgegeben wird.

10. Pneumatisches Fördersystem, insbesondere zur Förderung von Kunststoffgranulaten, umfassend wenigstens zwei Vorratsbehälter (1), die über einen Kupplungsbahnhof (2) nach einem der Ansprüche 1 bis 5 mit einer wahlweisen Kunststoffverarbeitungsmaschine (3) aus einer Anordnung aus wenigstens zwei Kunststoffverarbeitungsmaschinen (3) verbindbar sind, wobei jeweils ein Vorratsbehälter (1) mit einem Zulaufrohr (11) des Kupplungsbahnhofs (2) verbunden ist.

## Claims

1. Coupling station (2) for a pneumatic conveyor for bulk materials comprising an arrangement of inlet pipes (11) with coupling pieces (24) arranged at the end as well as an arrangement of suction pipes (31) with countercoupling members (32) arranged at the end, wherein the coupling pieces (24) of the inlet pipes (11) can be connected to the countercoupling members (32) of different suction pipes (31), **characterised in that** at least two inlet pipes (11) and at least two suction pipes (31) are each connected to an electric line, which are connected to the coupling piece (24) or countercoupling member (32) of the associated pipe (1, 31) in such a manner that the connection of a coupling piece (24) to a countercoupling member (32) brings about an electric connection of the electric lines connected to the corresponding pipes (11, 31), wherein a control device is arranged, which is connected to the electric lines of the inlet pipes (11) and of the suction pipes (31) and is adapted in such a manner that an electric voltage pulse is alternatingly supplied to the lines of the inlet pipes (11) or the suction pipes (31), wherein the lines of the suction pipes (31) or the inlet pipes (11) are checked for transmission of the respectively applied voltage pulse.

2. Coupling station according to claim 1, **characterised in that** the electric line of at least one pipe (11, 31) is formed by its metal reinforcement.

3. Coupling station according to one of the previous claims, **characterised in that** the voltage pulse is a low voltage pulse, which is preferably an alternating voltage pulse of less than or equal to 30 V or a direct voltage pulse of less than or equal to 70 V.

4. Coupling station according to one of the previous claims, **characterised in that** the control device is a programmable logic controller (4), in which preferably the allocations of inlet pipes (11) and suction pipes (31) are stored.

5. Coupling station according to one of the previous claims, **characterised in that** a display device (5) is provided, which is connected to the control device and on which the connections determined by the control device can be graphically displayed.

6. Method for determining connections of inlet pipes (11) and suction pipes (31) of a coupling station (2) of a pneumatic conveyor, **characterised in that** the pipes (11, 31) are provided with an electric line, which are connected to the coupling piece (24) or countercoupling member (32) of the respective pipe (11, 31) in such a manner that upon coupling of a coupling piece (24) to a countercoupling member (32), the electric lines of the corresponding pipes (11, 31) are electrically connected, wherein an electric voltage pulse is alternatingly supplied to the electric lines of the inlet pipes (11) or the suction pipes (31) and wherein the lines of the suction pipes (31) or the inlet pipes (11) are checked for transmission of the respectively applied voltage pulse.

7. Method according to claim 6, **characterised in that** the voltage pulse is a low voltage pulse, which is preferably an alternating voltage pulse of less than or equal to 30 V or a direct voltage pulse of less than or equal to 70 V.

8. Method according to claim 6 or 7, **characterised in that** the reinforcements of the pipes (11, 31) are used as electric lines for the alternating application of voltage pulses.

9. Method according to one of claims 6 to 8, **characterised in that** determined connections of inlet pipes (11) and suction pipes (31) are compared to connection specifications and an alarm signal is emitted in case of a deviation.

10. Pneumatic conveyor, in particular for conveying plastic granulates, comprising at least two storage tanks (1), which can be connected via a coupling station (2) according to one of claims 1 to 5 to an optional plastics processing machine (3) from an arrangement of at least two plastics processing machines (3), wherein a storage tank (1), respectively, is connected to an inlet pipe (11) of the coupling station (2).

## Revendications

1. Station de couplage (2) pour un système de transport pneumatique de matières déversables, comprenant un agencement de tuyaux d'amenée (11) comprenant des pièces de couplage (24) disposées à l'extrémité ainsi qu'un agencement de tuyaux d'aspiration (31) comprenant des pièces de couplage antagonistes (32) disposées à l'extrémité, sachant que les pièces de couplage (24) des tuyaux d'amenée (11) peuvent être reliées avec les pièces de couplage antagonistes (32) de différents tuyaux d'aspiration (31), **caractérisée en ce qu'**au moins deux tuyaux d'amenée (11) et au moins deux tuyaux d'aspiration (31) sont reliés chacun avec une ligne électrique, lignes qui sont reliées de telle manière avec la pièce de couplage (24) et la pièce de couplage antagoniste (32) du tuyau afférent (1, 31) que la liaison d'une pièce de couplage (24) avec une pièce de couplage antagoniste (32) établit une liaison électrique avec les lignes électriques reliées aux tuyaux afférents (11, 31), sachant qu'est agencé un dispositif de commande relié aux lignes électriques des tuyaux d'amenée (11) et des tuyaux d'aspiration (31) et qu'il est configuré de manière que les lignes des tuyaux d'amenée (11) et des tuyaux d'aspiration (31) reçoivent en alternance une impulsion de tension électrique, sachant que les lignes des tuyaux d'aspiration (31) et des tuyaux d'amenée (11) font l'objet d'un contrôle de passage de l'impulsion de tension respectivement émise.

2. Station de couplage selon la revendication 1, **caractérisée en ce que** la ligne électrique d'au moins un tuyau (11, 31) est formée par son armature métallique.

3. Station de couplage selon l'une des revendications précédentes, **caractérisée en ce que** l'impulsion de tension est une impulsion basse tension, de préférence une impulsion de tension alternative inférieure ou égale à 30 V, ou une impulsion de tension continue inférieure ou égale à 70 V.

4. Station de couplage selon l'une des revendications précédentes, **caractérisée en ce que** le dispositif de commande est une commande à mémoire programmable dans laquelle sont mémorisées de préférence des mises en correspondance de tuyaux d'amenée (11) et de tuyaux d'aspiration (31).

5. Station de couplage selon l'une des revendications précédentes, **caractérisée en ce qu'**est présent un dispositif d'affichage (5) relié au dispositif de commande et sur lequel les liaisons déterminées par le dispositif de commande sont représentables sous forme graphique.

6. Dispositif pour déterminer des liaisons de tuyaux d'amenée (11) et de tuyaux d'aspiration (31) dans une station de couplage (2) d'un système de transport pneumatique, **caractérisé en ce que** les tuyaux (11, 31) sont équipés d'une ligne électrique respective reliée avec la pièce de couplage (24) ou la pièce de couplage antagoniste (32) du tuyau respectif (11, 31), de telle manière que lors du couplage d'une pièce de couplage (24) avec une pièce de couplage antagoniste (32) les lignes électriques des tuyaux afférents (11, 31) sont reliées électriquement, sachant que les lignes électriques des tuyaux d'amenée (11) et des tuyaux d'aspiration (31) reçoivent en alternance une impulsion de tension électrique et sachant que les lignes électriques des tuyaux d'aspiration (31) et des tuyaux d'amenée (11) font l'objet d'un contrôle du passage de l'impulsion de tension respectivement émise.

7. Station de couplage selon la revendication 6, **caractérisée en ce que** l'impulsion de tension est une impulsion basse tension, de préférence une impulsion de tension alternative inférieure ou égale à 30 V, ou une impulsion de tension continue inférieure ou égale à 70 V.

8. Procédé selon la revendication 6 ou 7, **caractérisé en ce que** les armatures des tuyaux (11, 31) servent de lignes électriques par lesquelles sont émises en alternance des impulsions de tension.

9. Procédé selon l'une des revendications 6 à 8, **caractérisé en ce que** des liaisons déterminées de tuyaux d'amenée (11) et de tuyaux d'aspiration (31) sont comparées avec des critères de liaison et qu'un signal d'alarme est émis en cas de dérive.

10. Système de transport pneumatique, en particulier pour le transport de granulés en plastique, comprenant au moins deux réservoirs de stockage (1) reliables via une station de couplage (2) selon l'une des revendications 1 à 5 avec une machine (3) au choix de transformation des plastiques située dans un agencement d'au moins deux machines (3) de transformation des plastiques, sachant que respectivement un réservoir de stockage (1) est relié avec un tuyau d'amenée (11) de la station de couplage (2).
